(19) Europäisches Patentamt European Patent Office Office européen des brevets

(11) **EP 4 697 114 A1**

(12) **EUROPEAN PATENT APPLICATION**
published in accordance with Art. 153(4) EPC

(43) Date of publication:
**18.02.2026 Bulletin 2026/08**

(21) Application number: **24915191.1**

(22) Date of filing: **27.12.2024**

(51) International Patent Classification (IPC):
***G05B 23/02*** (2006.01)

(52) Cooperative Patent Classification (CPC):
**Y02P 90/02**

(86) International application number:
**PCT/CN2024/143169**

(87) International publication number:
**WO 2025/145977 (10.07.2025 Gazette 2025/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.01.2024 CN 202410006860**

(71) Applicant: **Chongqing Changan Automobile Co., Ltd.**
**Chongqing 400023 (CN)**

(72) Inventors:
• **XIAO, Mingwei**
**Chongqing 400023 (CN)**
• **ZHANG, Keqiang**
**Chongqing 400023 (CN)**
• **HUANG, Jie**
**Chongqing 400023 (CN)**

(74) Representative: **Groth & Co. KB**
**P.O. Box 6107**
**102 32 Stockholm (SE)**

(54) **VEHICLE REMOTE DIAGNOSIS AND DEBUGGING METHOD AND SYSTEM**

(57) The present application relates to the technical field of vehicle debugging, and discloses a vehicle remote diagnosis and debugging method and system. The method comprises: the vehicle sends information of a part to be debugged by a vehicle-side debugging center to a cloud-side debugging center, so that the cloud-side debugging center, in response to the information of the part to be debugged, requests tunnel connection information from a cloud-side tunnel center on a cloud platform; the vehicle receives the tunnel connection information returned by the cloud-side debugging center by the vehicle-side debugging center, forwards the tunnel connection information by the vehicle-side debugging center to a target part debugging center of the part to be debugged and the vehicle turns on a target vehicle-side tunnel client by the target part debugging center, and requests a debugging tunnel from the cloud-side tunnel center by the target vehicle-side tunnel client carrying the tunnel connection information, so that, after successfully verifying the tunnel connection information, the cloud-side tunnel center establishes the debugging tunnel; and the vehicle receives a remote debugging instruction sent by the cloud platform through the debugging tunnel. The present application solves the problem of low security of vehicle remote debugging under an intranet debugging condition.

FIG. 2

**Description**

**CROSS-REFERENCE TO RELATED APPLICATIONS**

The present application claims priority to Chinese Patent Application No. 202410006860.X, filed to the China National Intellectual Property Administration (CNIPA) on January 2, 2024, and entitled "VEHICLE REMOTE DIAGNOSIS AND DEBUGGING METHOD AND SYSTEM", the entire content of which is incorporated herein by reference.

**TECHNICAL FIELD**

The present application relates to the technical field of vehicle debugging, and in particular relates to a vehicle remote diagnosis and debugging method and system.

**BACKGROUND**

With platformization of vehicles, vehicle diagnosis and debugging has become an indispensable part of both vehicle development phase and vehicle maintenance phase. However, offline debugging at 4S stores often fails to obtain real-time data, so remote diagnosis and debugging subsequently develops. In conventional vehicle remote diagnosis technique, a vehicle is required to be connected to a cloud server on a public network, a debugging command from the cloud server is sent on the public network to the vehicle, and then a command protocol is converted by the vehicle into CAN messages for transmission within the vehicle. Due to complexity of a network environment of the vehicle and difficulty of developing conversion protocols, difficulty of the remote diagnosis is further increased. In certain techniques, a debugging link is established between the server and the vehicle based on intranet VPN technique, so as to remotely debug the vehicle. There is no need for the vehicle to be debugged to have an integrated customized software developed for it and have a private protocol customized for it. And it is only required to integrate an original controller debugging tool service of the vehicle and adjust a configuration of the controller debugging tool service. However, when performing remote debugging, there is a possibility of internal and external attacks, such attacks may be launched to the vehicle through the debugging link, and thus the security of vehicle remote debugging has not yet been guaranteed.

**SUMMARY OF THE INVENTION**

In view of this, the present application provides a vehicle remote diagnosis and debugging method and system to solve the problem of low security of vehicle remote debugging under an intranet debugging condition.
In a first aspect, the present application provides a vehicle remote diagnosis and debugging method. The method is applied to a vehicle, and the method comprises: sending information of a part to be debugged by a vehicle-side debugging center to a cloud-side debugging center, so that the cloud-side debugging center, in response to the information of the part to be debugged, requests tunnel connection information from a cloud-side tunnel center on a cloud platform, wherein the vehicle-side debugging center and the cloud-side debugging center provided on the cloud platform are software modules configured to communicate with each other on a public network, and the cloud-side tunnel center is a server configured to establish an intranet penetration tunnel; receiving the tunnel connection information returned by the cloud-side debugging center by the vehicle-side debugging center; forwarding the tunnel connection information by the vehicle-side debugging center to a target part debugging center of the part to be debugged, wherein each debuggable part in the vehicle is provided with a part debugging center configured to control a vehicle-side tunnel client corresponding to each debuggable part to be turned on or turned off, and the vehicle-side tunnel client is a client configured to establish the intranet penetration tunnel; turning on a target vehicle-side tunnel client by the target part debugging center, and requesting a debugging tunnel from the cloud-side tunnel center by the target vehicle-side tunnel client carrying the tunnel connection information, so that, after successfully verifying the tunnel connection information, the cloud-side tunnel center establishes the debugging tunnel; and receiving a remote debugging instruction sent by the cloud platform based on the information of the part to be debugged by the target vehicle-side tunnel client, and debugging the part to be debugged according to the remote debugging instruction.
According to the aforementioned technical means, the embodiments of the present application provide a vehicle-side debugging center and a cloud-side debugging center, at the vehicle and on the cloud platform respectively, for communicating with each other on the public network, provides a cloud-side tunnel center on the cloud platform for establishing an intranet penetration tunnel, and provides a vehicle-side tunnel client on each part in the vehicle. Thus, when a user needs an engineer to remotely debug one or more parts of the vehicle, information of a part to be debugged is first sent on the public network to the cloud platform. The cloud platform then uses the received information of the part to be debugged to request tunnel connection information from the cloud-side tunnel center, and subsequently returns the tunnel connection information to the vehicle. The vehicle then requests an intranet penetration tunnel from the cloud tunnel center by the vehicle-side tunnel client of the part to be debugged carrying the tunnel connection information. The cloud-side tunnel center establishes the debugging tunnel only after it successfully decodes and verifies the tunnel connection information, thereby enabling the debugging tunnel to have an encryption mechanism and ensuring the security of the debugging tunnel. Moreover, the present application can realize establishment of the debugging tunnel by using general tunnel tools such as FRP or NPS without the need of secondary development for the parts of the vehicle, and has the advantage of being deployed more conveniently as compared to remote debugging methods of prior art in the industry, while at the same time reducing development costs of remote debugging.

In an optional embodiment, the information of the part to be debugged comprises attribute information of the part to be debugged and a diagnosis debugging code, wherein the attribute information of the part to be debugged is configured to describe the part to be debugged, and the diagnosis debugging code is configured to be returned by the cloud-side debugging center to the vehicle-side debugging center together with the tunnel connection information, so that the vehicle-side debugging center verifies whether the received diagnostic debugging code is consistent with the sent diagnostic debugging code.

According to the aforementioned technical means, when a user needs an engineer to perform remote diagnosis and debugging, the vehicle also sends a diagnosis debugging code to the cloud platform. Subsequently, when the cloud platform returns the tunnel connection information, the diagnosis debugging code is also carried to be returned to the vehicle. The vehicle then determines whether the tunnel connection information is returned by the correct cloud-side debugging center based on a judgement result of the consistency between the sent diagnostic debugging code and the received diagnostic debugging code, thereby preventing damage caused by a situation that the returned tunnel connection information is fraudulent attack information sent by external hackers.

In an optional embodiment, the diagnosis debugging code is generated in the following way: calculating and obtaining a hash value by using a current timestamp, a vehicle unique identifier, and screen coordinates, wherein the screen coordinates are coordinates clicked by a user on a vehicle-side screen when the user requests for generating the diagnosis debugging code; and randomly extracting a data value with a predetermined number of bits from the hash value, so as to form the diagnosis debugging code.

According to the aforementioned technical means, as compared to the generating way of conventional verification codes, screen click coordinates are additionally introduced into the diagnosis debugging code. As a trigger button is a region area having a range of coordinates, and the process that the user of the vehicle clicks on screen coordinates has greater randomness, therefore, a random verification code generated in this way has higher randomness, is more resistant to cracking, and has higher security as compared to a conventional random verification code.

In an optional embodiment, the tunnel connection information comprises a tunnel connection code and tunnel identity authentication information.

According to the aforementioned technical means, the tunnel connection information provided by the embodiments of the present application comprises a tunnel connection code and tunnel identity authentication information. The tunnel connection code is configured to pair the vehicle-side tunnel client with the cloud-side tunnel center to establish a debugging channel. The tunnel identity authentication information is configured to enable the cloud-side tunnel center to verify that the tunnel connection code sent by the vehicle-side tunnel client is the one previously sent by the cloud platform, rather than being a tunnel connection code sent by a hacker to attempt to launch an attack, which further ensures the security of the tunnel.

In an optional embodiment, the step of receiving a remote debugging instruction sent by the cloud platform based on the information of the part to be debugged by the target vehicle-side tunnel client comprises: receiving the remote debugging instruction, and auditing the remote debugging instruction based on an instruction whitelist and a parameter whitelist; if an auditing result is not pass, refusing to debug the part to be debugged according to the remote debugging instruction; and if an auditing result is pass, performing the step of debugging the part to be debugged according to the remote debugging instruction.

According to the aforementioned technical means, before the vehicle performs remote debugging according to the remote debugging instruction sent by the cloud platform, the remote debugging instruction is audited based on an instruction whitelist and a parameter whitelist. Only those instructions with an auditing result being pass are executed for remote debugging, which further prevents internal engineers from inputting malicious debugging instructions that could damage the vehicle, thereby solving a problem of internal security.

In an optional embodiment, the method further comprises: turning off the target vehicle-side tunnel client by the target part debugging center, and destroying the tunnel connection information and the diagnosis debugging code, so that the debugging tunnel is closed when the cloud-side tunnel center detects that the debugging tunnel does not transmit data over a preset time duration.

According to the aforementioned technical means, a secure and convenient log-off mechanism for the debugging tunnel is provided.

In an optional embodiment, after the vehicle-side debugging center verifies the received diagnosis debugging code is consistent with the sent diagnosis debugging code, the method further comprises: disabling a USB local debugging mechanism and destroying the diagnosis debugging code by the vehicle-side debugging center.

According to the aforementioned technical means, due to introducing the step of disabling the USB local debugging mechanism, as compared to conventional remote debugging and offline debugging mechanisms, it can more effectively prevent malicious users from accessing the tunnel to launch attacks to the cloud platform.

In a second aspect, an embodiment of the present application provides a vehicle remote diagnosis and debugging method. The method is applied to a cloud platform, and the method comprises: receiving information of a part to be debugged sent by a vehicle-side debugging center by a cloud-side debugging center, wherein the vehicle-side debugging center and the cloud-side debugging center are software modules configured to communicate with each other on a public network, and the vehicle-side debugging center is provided on a vehicle; in response to the information of the part to be debugged, requesting tunnel connection information from a cloud-side tunnel center by the cloud-side debugging center, wherein the cloud-side tunnel center is a server which is provided on a cloud platform and configured to establish an intranet penetration tunnel; sending the tunnel connection information to the vehicle-side debugging center by the cloud-side debugging center, so that the vehicle-side debugging center forwards the tunnel connection information to a target part debugging center of the part to be debugged, so as to enable the target part debugging center to turn on a target vehicle-side tunnel client, wherein each debuggable part in the vehicle is provided with a part debugging center configured to control a vehicle-side tunnel client corresponding to each debuggable part to be turned on or turned off, and the vehicle-side tunnel client is a client configured to establish the intranet penetration tunnel; receiving the tunnel connection information sent by the target vehicle-side tunnel client by the cloud-side tunnel center, and verifying the tunnel connection information; after successfully verifying the tunnel connection information, establishing a debugging tunnel by the cloud-side tunnel center; and sending a remote debugging instruction, generated based on the information of the part to be debugged, through the debugging tunnel to the target vehicle-side tunnel client, so that the vehicle debugs the part to be debugged according to the remote debugging instruction.

In an optional embodiment, the step of, in response to the information of the part to be debugged, requesting tunnel connection information from a cloud-side tunnel center by the cloud-side debugging center comprises: when the cloud-side tunnel center receives a request message sent by the cloud-side debugging center, verifying whether IP information of the cloud-side debugging center is included within pre-stored IP information; if the IP information is included within the pre-stored IP information, performing two-way certificate authentication on the cloud-side debugging center by the cloud-side tunnel center; if the two-way certificate authentication is pass, verifying an account and a password sent by the cloud-side debugging center by the cloud-side tunnel center; and if the verification of the account and the password is pass, in response to the request message, sending the tunnel connection information by the cloud-side tunnel center to the cloud-side debugging center.

According to the aforementioned technical means, when the cloud-side debugging center requests tunnel connection information from the cloud-side tunnel center, a minimal virtual domain is established for verifying the cloud-side debugging center by the cloud-side tunnel center in a manner of defining an IP range. Security within the domain is then ensured by means of both a certificate authentication and an account-password authentication, so that the identity of the cloud-side debugging center is authenticated, which prevents damage caused by a situation that the massage for requesting the tunnel connection information is sent by hackers and, as compared to conventional token authentication methods, prevents a risk of malicious access due to token leak.

In an optional embodiment, the step of sending a remote debugging instruction, generated based on the information of the part to be debugged, through the debugging tunnel to the target vehicle-side tunnel client comprises: auditing the remote debugging instruction based on an instruction whitelist and a parameter whitelist; if an auditing result is not pass, refusing to send the remote debugging instruction; and if an auditing result is pass, sending the remote debugging instruction.

In an optional embodiment, the method further comprises: sending a log-off message by the cloud-side debugging center to the cloud-side tunnel center; in response to the log-off message, closing the debugging tunnel and destroying the tunnel connection information by the cloud-side tunnel center; and destroying the tunnel connection information by the cloud-side debugging center and sending a log-off command to the vehicle-side debugging center, so that the vehicle-side debugging center forwards the log-off command to the target part debugging center, so as to enable the target part debugging center to turn off the target vehicle-side tunnel client and destroy the tunnel connection information.

In a third aspect, the present application provides a vehicle remote diagnosis and debugging system. The system comprises a vehicle and a cloud platform, wherein: the vehicle is configured to send information of a part to be debugged by means of a vehicle-side debugging center to a cloud-side debugging center on the cloud platform, wherein the vehicle-side debugging center and the cloud-side debugging center are software modules configured to communicate with each other on a public network; the cloud platform is configured to, in response to the information of the part to be debugged, request tunnel connection information from a cloud-side tunnel center by means of the cloud-side debugging center, wherein the cloud-side tunnel center is a server which is provided on the cloud platform and configured to establish an intranet penetration tunnel; the cloud platform is configured to send the tunnel connection information to the vehicle-side debugging center by means of the cloud-side debugging center; the vehicle is configured to forward the tunnel connection information by means of the vehicle-side debugging center to a target part debugging center of the part to be debugged, wherein each debuggable part in the vehicle is provided with a part debugging center configured to control a vehicle-side tunnel client corresponding to each debuggable part to be turned on or turned off, and the vehicle-side tunnel client is a client configured to establish the intranet penetration tunnel; the vehicle is configured to turn on a target vehicle-side tunnel client by means of the target part debugging center; the vehicle is configured to send the tunnel connection information to the cloud-side tunnel center by means of the target vehicle-side tunnel client; the cloud platform is configured to verify the tunnel connection information by means of the cloud-side tunnel center, and, after successfully verifying the tunnel connection information, establish the debugging tunnel; the cloud platform is configured to send a remote debugging instruction, generated based on the information of the part to be debugged, through the debugging tunnel to the target vehicle-side tunnel client; and the vehicle is configured to debug the part to be debugged according to the remote debugging instruction.

Technical solutions provided by the present application have the following advantages:

(1) The embodiments of the present application provide a vehicle-side debugging center and a cloud-side debugging center, at the vehicle and on the cloud platform respectively, for communicating with each other on the public network, provides a cloud-side tunnel center on the cloud platform for establishing an intranet penetration tunnel, and provides a vehicle-side tunnel client on each part in the vehicle. Thus, when a user needs an engineer to remotely debug one or more parts of the vehicle, information of a part to be debugged is first sent on the public network to the cloud platform. The cloud platform then uses the received information of the part to be debugged to request tunnel connection information from the cloud-side tunnel center, and subsequently returns the tunnel connection information to the vehicle. The vehicle then requests an intranet penetration tunnel from the cloud tunnel center by the vehicle-side tunnel client of the part to be debugged carrying the tunnel connection information. The cloud-side tunnel center establishes the debugging tunnel only after it successfully decodes and verifies the tunnel connection information, thereby enabling the debugging tunnel to have an encryption mechanism and ensuring the security of the debugging tunnel. Moreover, the present application can realize establishment of the debugging tunnel by using general tunnel tools such as FRP or NPS without the need of secondary development for the parts of the vehicle, and has the advantage of being deployed more conveniently as compared to remote debugging methods of prior art in the industry, while at the same time reducing development costs of remote debugging.

(2) According to the aforementioned technical means, when a user needs an engineer to perform remote diagnosis and debugging, the vehicle also sends a diagnosis debugging code to the cloud platform. Subsequently, when the cloud platform returns the tunnel connection information, the diagnosis debugging code is also carried to be returned to the vehicle. The vehicle then determines whether the tunnel connection information is returned by the correct cloud-side debugging center based on a judgement result of the consistency between the sent diagnostic debugging code and the received diagnosis debugging code, thereby preventing damage caused by a situation that the returned tunnel connection information is fraudulent attack information sent by external hackers.

(3) As compared to the generating way of conventional verification codes, screen click coordinates are additionally introduced into the diagnosis debugging code provided by the embodiments of the present application. As a trigger button is a region area having a range of coordinates, and the process that the user of the vehicle clicks on screen coordinates has greater randomness, therefore, a random verification code generated in this way has higher randomness, is more resistant to cracking, and has higher security as compared to a conventional random verification code.

(4) The tunnel connection information provided by the embodiments of the present application comprises a tunnel connection code and tunnel identity authentication information. The tunnel connection code is configured to pair the vehicle-side tunnel client with the cloud-side tunnel center to establish a debugging channel. The tunnel identity authentication information is configured to enable the cloud-side tunnel center to verify that the tunnel connection code sent by the vehicle-side tunnel client is the one previously sent by the cloud platform, rather than being a tunnel connection code sent by a hacker to attempt to launch an attack, which further ensures the security of the tunnel.

(5) In the embodiments of the present application, before the vehicle performs remote debugging according to the remote debugging instruction sent by the cloud platform, the remote debugging instruction is audited based on an instruction whitelist and a parameter whitelist. Only those instructions with an auditing result being pass are executed for remote debugging, which further prevents internal engineers from inputting malicious debugging instructions that could damage the vehicle, thereby solving a problem of internal security.

(6) A secure and convenient log-off mechanism for the debugging tunnel is provided.

(7) Due to introducing the step of disabling the USB local debugging mechanism, as compared to conventional remote debugging and offline debugging mechanisms, it can more effectively prevent malicious users from accessing the tunnel to launch attacks to the cloud platform.

(8) When the cloud-side debugging center requests tunnel connection information from the cloud-side tunnel center, a minimal virtual domain is established for verifying the cloud-side debugging center by the cloud-side tunnel center in a manner of defining an IP range. Security within the domain is then ensured by means of both a certificate authentication and an account-password authentication, so that the identity of the cloud-side debugging center is authenticated, which prevents damage caused by a situation that the massage for requesting the tunnel connection information is sent by hackers and, as compared to conventional token authentication methods, prevents a risk of malicious access due to token leak.

BRIEF DESCRIPTION OF THE DRAWINGS

To illustrate technical solutions of the specific embodiments of the present application or the prior art more clearly, the accompanying drawings that are needed for describing the specific embodiments or the prior art will be briefly introduced below. Apparently, the drawings described below only represent certain embodiments of the present application. For those skilled in the art, other drawings may be obtained from these drawings without making creative labor.

FIG. 1 is a structural schematic diagram of a vehicle remote diagnosis and debugging system according to an embodiment of the present application;

FIG. 2 is a flowchart diagram of a vehicle remote diagnosis and debugging method according to an embodiment of the present application;

FIG. 3 is another flowchart diagram of a vehicle remote diagnosis and debugging method according to an embodiment of the present application;

FIG. 4 is another flowchart diagram of a vehicle remote diagnosis and debugging method according to an embodiment of the present application;

FIG. 5 is another flowchart diagram of a vehicle remote diagnosis and debugging method according to an embodiment of the present application;

FIG. 6 is another flowchart diagram of a vehicle remote diagnosis and debugging method according to an embodiment of the present application.

DETAILED DESCRIPTION

To make objectives, technical solutions, and advantages of the embodiments of the present application more clearly understood, the technical solutions of the embodiments of the present application will be described clearly and completely with reference to the accompanying drawings of the embodiments of the present application. Apparently, the described embodiments only represent a portion of the embodiments of the present application, not all of them. Based on the embodiments described in the present application, all other embodiments obtainable by those skilled in the art without making creative labor fall within the protection scope of the present application.

According to the embodiments of the present application, a vehicle remote diagnosis and debugging method is provided. It should be noted that steps shown in the flowchart diagrams of the drawings may be executed in a computer system, such as a computer with a set of computer-executable instructions. Furthermore, although a logical sequence is shown in the flowchart diagrams, in certain circumstances, the steps shown or described may be executed in an order different from that shown herein.

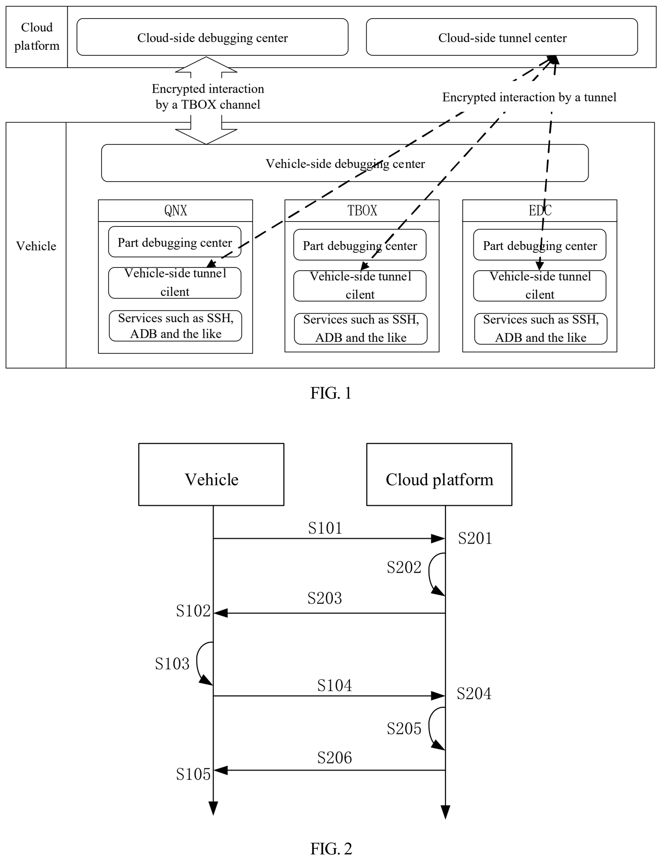

The embodiments of the present application provide a vehicle remote diagnosis and debugging method which is applied to a vehicle remote diagnosis and debugging system. As shown in FIG. 1, the vehicle remote diagnosis and debugging system provided by the embodiments of the present application comprises a vehicle and a cloud platform. A vehicle-side debugging center is provided in the vehicle side, and a cloud-side debugging center is provided on the cloud platform. The vehicle-side debugging center and the cloud-side debugging center are software modules configured to communicate with each other on a public network. For example, the vehicle-side debugging center and the cloud-side debugging center may communicate with each other on the public network and transmit data by means of a T-Box. The cloud-side debugging center is primarily configured to perform interaction and identity authentication for operation and maintenance personnel, and is a coordination center for establishing and destroying the debugging tunnel on the cloud platform. The vehicle-side debugging center is further configured to perform interaction between the vehicle and users.

Furthermore, in the vehicle, for each debuggable part, a part debugging center is provided in a system thereof. Take a QNX part, a TBOX part, and an EDC part as examples in FIG. 1, each debuggable part is separately provided with a part debugging center configured to turn on, configure and turn off a vehicle-side tunnel client and debugging service programs such as SSH and ADB. Furthermore, a vehicle-side tunnel client is provided in a system of each part in the vehicle, and a cloud-side tunnel center is provided on the cloud platform. The cloud-side tunnel center is a server configured to establish an intranet penetration tunnel, and the vehicle-side tunnel client is a client configured to establish the intranet penetration tunnel. For example, the cloud-side tunnel center may use FRPS (Fast Reverse Proxy Server), NPS (Network Policy Server), and the like. The vehicle-side tunnel client may use FRPC (Fast Reverse Proxy Client), NPC (Network Policy Client), and the like. Parts of the vehicle on the internal network is called, viewed, diagnosed, and debugged by the cloud platform of the external network through the intranet penetration tunnel.

Based on the above-mentioned system, when a user needs an engineer to remotely debug a part in the vehicle, a debugging request may be sent by the vehicle-side debugging center to the cloud-side debugging center. Then the cloud-side debugging center turns on the cloud-side tunnel center. The vehicle then turns on the corresponding vehicle-side tunnel client and executes a debugging service program, such as SSH (Secure Shell), ADB (Android Debug Bridge), by the part debugging center of the part to be debugged, so as to establish an intranet penetration tunnel by means of the vehicle-side tunnel client and the cloud-side tunnel center that have both been turned on. The engineer can then remotely debug a specified part based on the established intranet penetration tunnel. The intranet penetration tunnel does not involve communication protocol conversion between the public network and CAN, so that the development complexity of the remote debugging program is reduced. Moreover, the present application can realize establishment of the debugging tunnel for remote debugging of the specified part by using general tunnel tools such as FRP or NPS without the need of secondary development for the parts of the vehicle, and has the advantage of being deployed more conveniently as compared to remote debugging methods of prior art in the industry, while at the same time reducing development costs of remote debugging.

Furthermore, the vehicle remote diagnosis and debugging method provided by the embodiments of the present application based on the aforementioned system can further improve the security of remote debugging. As shown in FIG. 2, the vehicle remote diagnosis and debugging method provided by the embodiments of the present application comprises steps S101 to S105 and steps S201 to S206, wherein steps S101 to S105 are applied to the vehicle, and steps S201 to S206 are applied to the cloud platform. The specific steps of the process are as follows:

Step S101: sending information of a part to be debugged by a vehicle-side debugging center to a cloud-side debugging center;

Step S201: receiving the information of the part to be debugged sent by the vehicle-side debugging center by the cloud-side debugging center;

Step S202: in response to the information of the part to be debugged, requesting tunnel connection information from a cloud-side tunnel center by the cloud-side debugging center;

Step S203: sending the tunnel connection information to the vehicle-side debugging center by the cloud-side debugging center;

Step S102: receiving the tunnel connection information returned by the cloud-side debugging center by the vehicle-side debugging center;

Step S103: forwarding the tunnel connection information by the vehicle-side debugging center to a target part debugging center of the part to be debugged;

Step S104: turning on a target vehicle-side tunnel client by the target part debugging center, and requesting a debugging tunnel from the cloud-side tunnel center by the target vehicle-side tunnel client carrying the tunnel connection information;

Step S204: receiving the tunnel connection information sent by the target vehicle-side tunnel client by the cloud-side tunnel center, and verifying the tunnel connection information;

Step S205: after successfully verifying the tunnel connection information, establishing the debugging tunnel by the cloud-side tunnel center;

Step S206: sending a remote debugging instruction, generated based on the information of the part to be debugged, through the debugging tunnel to the target vehicle-side tunnel client;

Step S105: receiving the remote debugging instruction sent by the cloud platform based on the information of the part to be debugged by the target vehicle-side tunnel client, and debugging the part to be debugged according to the remote debugging instruction.

Specifically, in the embodiment of the present application, when a user needs an engineer to remotely debug one or more parts of the vehicle, information of a part to be debugged is first sent on the public network to the cloud platform. The cloud platform then uses the received information of the part to be debugged to request tunnel connection information from the cloud-side tunnel center, and subsequently returns the tunnel connection information to the vehicle. The vehicle then requests an intranet penetration tunnel from the cloud tunnel center by the vehicle-side tunnel client of the part to be debugged carrying the tunnel connection information. The cloud-side tunnel center establishes the debugging tunnel only after it successfully decodes and verifies the tunnel connection information, thereby enabling the debugging tunnel to have an encryption mechanism and ensuring the security of the debugging tunnel. Finally, the cloud-side tunnel center initiates the debugging commands, such as SSH login, ADB login, part debugging, and the like, through the established tunnel. The present application can realize establishment of the debugging tunnel by using general tunnel tools such as FRP or NPS without the need of secondary development for the parts of the vehicle, and has the advantage of being deployed more conveniently as compared to remote debugging methods of prior art in the industry, while at the same time reducing development costs of remote debugging.

Furthermore, in some optional embodiments, the tunnel connection information comprises a tunnel connection code and tunnel identity authentication information.

Specifically, the tunnel connection information provided by the embodiments of the present application comprises a tunnel connection code and tunnel identity authentication information. The tunnel connection code is configured to pair the vehicle-side tunnel client with the cloud-side tunnel center to establish a debugging channel. The tunnel identity authentication information is configured to enable the cloud-side tunnel center to verify that the tunnel connection code sent by the vehicle-side tunnel client is the one previously sent by the cloud platform, rather than being a tunnel connection code sent by a hacker to attempt to launch an attack, which further ensures the security of the tunnel.

In some optional embodiments, the information of the part to be debugged sent by the vehicle-side debugging center to the cloud-side debugging center comprises attribute information of the part to be debugged and a diagnosis debugging code, wherein the attribute information of the part to be debugged is configured to describe the part to be debugged, for example, the part to be debugged is described as a QNX part, a TBOX part, or an EDC part. After the diagnosis debugging code which serves as a verification code is sent to the cloud-side debugging center, the cloud-side debugging center returns both the diagnosis debugging code and the tunnel connection information to the vehicle-side debugging center, so that the vehicle-side debugging center, after receiving the diagnosis debugging code, decrypts it and verifies whether the received diagnosis debugging code is consistent with the sent diagnosis debugging code. If the received diagnosis debugging code is not consistent with the sent diagnosis debugging code, it indicates the tunnel connection information received by the vehicle-side debugging center may be malicious intrusion data. Consequently, the vehicle refuses to execute subsequent steps of establishing the debugging tunnel, thereby further improving the security of vehicle remote debugging.

Furthermore, in some optional implementations, if the verification of the diagnosis debugging code is passed, the vehicle-side debugging center further prompts the vehicle user by an in-vehicle display pop-up window to reconfirm authorization for the part to be debugged. After the user grants authorization by clicking the button within the in-vehicle display pop-up window, the vehicle-side debugging center forwards the tunnel connection information to the part debugging center. By adding a step of user authorization, the security of vehicle remote debugging is further improved.

Furthermore, in some optional implementations, when the vehicle-side debugging center and the part debugging center interact with each other, a two-way certificate authentication is required, that is to say, a certificate of the vehicle-side debugging center is stored in the part debugging center, and a certificate of the part debugging center is stored in the vehicle-side debugging center. The two-way certificate authentication is completed by exchanging certificates and verifying whether the received certificate matches the pre-stored one. Only after identity authentication is passed, the part debugging center turns on the vehicle-side tunnel client and executes debugging services such as SSH and ADB, thereby further improving the security of remote debugging.

It should be noted that the vehicle-side debugging center may send the attribute information of the part to be debugged and a diagnosis debugging code to the cloud-side debugging center in two ways: either the vehicle-side debugging center directly sends them to the cloud-side debugging center, or, the vehicle user may first generate the corresponding attribute information of the part to be debugged and a diagnosis debugging code by operating the vehicle-side debugging center in the vehicle, and sends the attribute information of the part to be debugged and the diagnosis debugging code, via SMS, telephone, online messaging, and the like, to a client of the engineer (e.g., a mobile phone or a personal computer of the engineer), the engineer then manually inputs the received attribute information of the part to be debugged and the received diagnosis debugging code into the cloud-side debugging center. Before the engineer manually inputs the received attribute information of the part to be debugged and the received diagnosis debugging code into the cloud-side debugging center, an identity of the engineer can be verified, authorization is granted for the engineer to perform inputting only upon successful verification, which reduces risks of information theft or tampering during directly sending the information of the part to be debugged from the vehicle-side debugging center to the cloud-side debugging center, thereby further improving the security of vehicle remote diagnosis and debugging.

In some optional embodiments, the diagnosis debugging code is generated in the following way:

Step a1: calculating and obtaining a hash value by using a current timestamp, a vehicle unique identifier, and screen coordinates, wherein the screen coordinates are coordinates clicked by a user on a vehicle-side screen when the user requests for generating the diagnosis debugging code;

Step a2: randomly extracting a data value with a predetermined number of bits from the hash value, so as to form the diagnosis debugging code.

Specifically, in the embodiments of the present application, when generating the diagnosis debugging code, the user is required to click on the interactive interface of the vehicle-side debugging center, so as to trigger an instruction of generating the diagnosis debugging code. The vehicle-side debugging center then calculates and obtains a hash value (e.g., 32 bits) by using the current timestamp, the vehicle identification number, and the coordinates clicked by the user on the screen, and randomly extracts a data value with a predetermined number of bits (e.g., 10 bits) to form the diagnosis debugging code. The algorithmic formula is as follows:

diagnosis debugging code = RANDOM(HASH(vehicle identification number + current timestamp + screen coordinates), predetermined number of bits).

As compared to the generating way of conventional verification codes, screen click coordinates are additionally introduced into the diagnosis debugging code provided by the embodiments of the present application. As a trigger button is a region area having a range of coordinates, and the process that the user of the vehicle clicks on screen coordinates has greater randomness, therefore, a random verification code generated in this way has higher randomness, is more resistant to cracking, and has higher security as compared to a conventional random verification code currently on the market.

In some optional embodiments, the step S202 comprises:

Step e1: when the cloud-side tunnel center receives a request message sent by the cloud-side debugging center, verifying whether IP information of the cloud-side debugging center is included within pre-stored IP information.

Step e2: if the IP information is included within the pre-stored IP information, performing two-way certificate authentication on the cloud-side debugging center by the cloud-side tunnel center.

Step e3: if the two-way certificate authentication is pass, verifying an account and a password sent by the cloud-side debugging center by the cloud-side tunnel center.

Step e4: if the verification of the account and the password is pass, in response to the request message, sending the tunnel connection information by the cloud-side tunnel center to the cloud-side debugging center.

Specifically, in the embodiments of the present application, when the cloud-side debugging center requests tunnel connection information from the cloud-side tunnel center, a minimal virtual domain is established for verifying the cloud-side debugging center by the cloud-side tunnel center in a manner of defining an IP range. The IP address range acceptable by the cloud-side tunnel center is defined, and the acceptable IP address range corresponds to a portion of all the cloud-side debugging centers. Security within the domain is then ensured by means of both a certificate authentication and an account-password authentication (the steps of two-way certificate authentication are the same as those in the embodiments described above, and are not repeated herein). Only after the identity of the cloud-side debugging center is authenticated in the above way, the tunnel connection information is sent by the cloud-side tunnel center to the cloud-side debugging center in response to the request message, which prevents damage caused by a situation that the massage for requesting the tunnel connection information is sent by hackers and, as compared to conventional token authentication methods, prevents a risk of malicious access due to token leak.

Furthermore, in some optional implementations, whenever involving the interactions between the cloud-side debugging center and the cloud-side tunnel center, the verification steps described in the steps e1 to e3 are performed, thereby significantly improving the security of vehicle remote debugging. Similarly, each interaction between the vehicle-side tunnel client and the cloud-side tunnel center may also execute the identity verification steps described in the steps e1 to e3.

In some optional embodiments, after the vehicle-side debugging center verifies the received diagnostic debugging code is consistent with the sent diagnostic debugging code, the method further comprises:

Step c1: disabling a USB local debugging mechanism and destroying the diagnosis debugging code by the vehicle-side debugging center.

Specifically, in the embodiments of the present application, by disabling the USB local debugging mechanism and destroying the diagnosis debugging code, as compared to conventional remote debugging and offline debugging mechanisms, it can more effectively prevent malicious users from accessing the tunnel to launch attacks to the cloud platform, thereby improving the security of vehicle remote diagnosis and debugging.

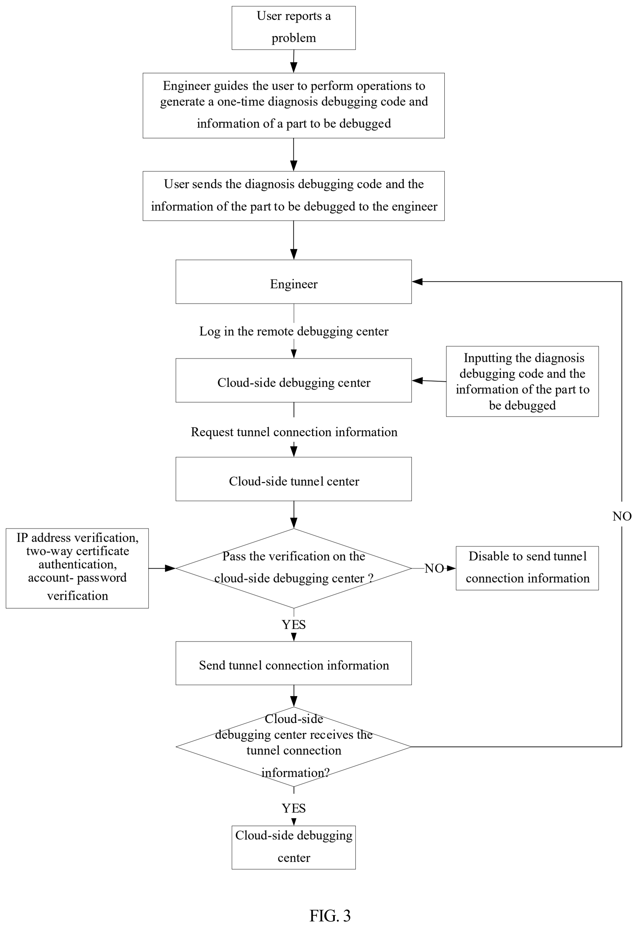

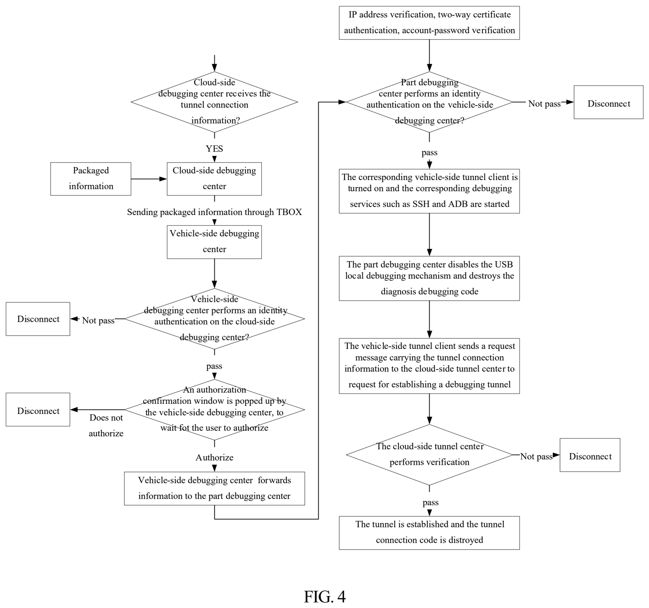

In an embodiment of a specific application scenario, as shown in FIGS. 3 and 4, the complete steps for establishing a debugging tunnel provided by the technical solution of the embodiments of the present application are as follows:

1. The user reports a problem to an engineer by means of a client or a vehicle;
2. The engineer guides the user to perform operations on an interactive interface of the vehicle-side debugging center in the vehicle, so as to generate a one-time diagnosis debugging code that is valid for 10 minutes and information of a part to be debugged;
3. The user sends the diagnosis debugging code and the information of the part to be debugged to a client of the engineer by means of the vehicle-side terminal or a client;
4. The engineer logs in the cloud-side debugging center. After an identity authentication thereof is passed, the engineer inputs the diagnosis debugging code and the information of the part to be debugged into the cloud-side debugging center;

5. Upon receiving the diagnosis debugging code and the information of the part to be debugged, the cloud-side debugging center requests tunnel connection information from the cloud-side tunnel center;

6. After IP address verification, two-way certificate authentication, and account-password verification of the cloud-side debugging center are all successfully passed, the cloud-side tunnel center sends the tunnel connection information to the cloud-side debugging center. The tunnel connection information comprises a one-time tunnel link code that is valid for 10 minutes and tunnel identity authentication information;

7. After confirming receiving the tunnel connection information, the cloud-side debugging center packages and encrypts the configuration information including the tunnel connection information, the diagnosis debugging code, and certain certifications, and sends the packaged and encrypted configuration information through by means of the T-Box on the public network to the vehicle-side debugging center;

8. The vehicle-side debugging center decrypts the received packaged and encrypted configuration information, and performs identity authentication on the cloud-side debugging center by means of verification manners such as the two-way certificate authentication, diagnosis debugging code verification, and the like;

9. After the identity authentication is passed, an authorization confirmation window is popped up by the vehicle-side debugging center on the interface thereof, and the user is enabled to manually authorize the remote debugging;

10. After the user manually authorizes the remote debugging, the vehicle-side debugging center sends the tunnel connection information to the part debugging center corresponding to the part to be debugged;

11. The part debugging center likewise verifies the vehicle-side debugging center by means of verification manners, such as IP address verification, two-way certificate authentication, account-password verification, and the like. After successful verification, the corresponding vehicle-side tunnel client is turned on and the corresponding debugging services such as SSH and ADB are started;

12. The part debugging center disables the USB local debugging mechanism and destroys the diagnosis debugging code;

13. The vehicle-side tunnel client sends a request message carrying the encrypted tunnel connection information provided by the part debugging center to the cloud-side tunnel center to request for establishing a debugging tunnel;

14. The cloud-side tunnel center decrypts the tunnel connection information and verifies the tunnel connection information, including performing the two-way certificate authentication, tunnel link code authentication, and tunnel identity authentication information verification;

15. After successful verification, the cloud-side tunnel center establishes an intranet penetration tunnel for communicating with the vehicle-side tunnel client and destroys the tunnel link code within the tunnel connection information.

In some optional embodiments, the step S206 comprises:

Step f1: auditing the remote debugging instruction based on an instruction whitelist and a parameter whitelist.
Step f2: if an auditing result is not pass, refusing to send the remote debugging instruction.
Step f3: if an auditing result is pass, sending the remote debugging instruction.

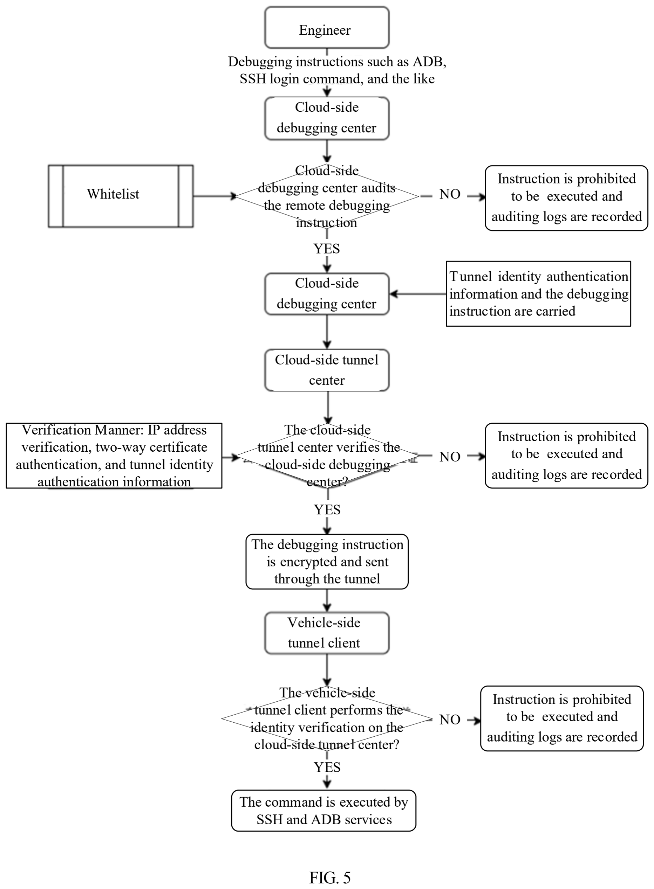

Specifically, as shown in FIG. 5, in the embodiments of the present application, before the cloud-side tunnel center sends the remote debugging instruction, the remote debugging instruction is audited based on an instruction whitelist and a parameter whitelist stored in the cloud-side debugging center. Only those instructions with an auditing result being pass are sent, which further prevents internal engineers from maliciously debugging, thereby improving the security of vehicle remote debugging.

In some optional embodiments, step S105 comprises:

Step b1: receiving the remote debugging instruction, and auditing the remote debugging instruction based on an instruction whitelist and a parameter whitelist;
Step b2: if an auditing result is not pass, refusing to debug the part to be debugged according to the remote debugging instruction;
Step b3: if an auditing result is pass, performing the step of debugging the part to be debugged according to the remote debugging instruction.

Specifically, in the embodiments of the present application, an instruction whitelist and a parameter whitelist are also provided in the part debugging center of the vehicle. Before the vehicle performs remote debugging according to the remote debugging instruction sent by the cloud platform, the remote debugging instruction is audited based on the instruction whitelist and the parameter whitelist, so as to determine whether the remote debugging instruction is a legit instruction as recorded in the whitelist. Only those instructions with an auditing result being pass are executed for remote debugging, and those instruction with an auditing result being not pass are not executed for subsequent debugging steps, which further prevents internal engineers from inputting malicious debugging instructions that could damage the vehicle, thereby solving a problem of internal security.

In some optional embodiments, the vehicle additionally performs the following steps:

Step d1: turning off the target vehicle-side tunnel client by the target part debugging center, and destroying the tunnel connection information and the diagnosis debugging code, so that the debugging tunnel is closed when the cloud-side tunnel center detects that the debugging tunnel does not transmit data over a preset time duration.

Specifically, in the embodiments of the present application, by setting a mechanism that the debugging tunnel is closed when the cloud-side tunnel center detects that the debugging tunnel does not transmit data over a preset time duration, the user proactively turns off the target vehicle-end tunnel client by means of the target part debugging center and destroy the tunnel connection information and the diagnosis debugging code, so that the debugging tunnel is automatically closed after a prolonged time duration has elapsed without data transmission, which reduces communication resource consumption in one aspect, and also prevents malicious exploitation of the debugging tunnel in another aspect, thereby realizing a scheme of automatic logging off the debugging tunnel.

In some optional implementations, the cloud platform also executes steps g1 to g3, and the vehicle also performs step g4. The specific steps are as follows:

Step g1: sending a log-off message by the cloud-side debugging center to the cloud-side tunnel center;

Step g2: in response to the log-off message, closing the debugging tunnel and destroying the tunnel connection information by the cloud-side tunnel center;

Step g3: destroying the tunnel connection information by the cloud-side debugging center and sending a log-off command to the vehicle-side debugging center;

Step g4: forwarding the log-off command by the vehicle-side debugging center to the target part debugging center, so as to enable the target part debugging center to turn off the target vehicle-side tunnel client and destroy the tunnel connection information.

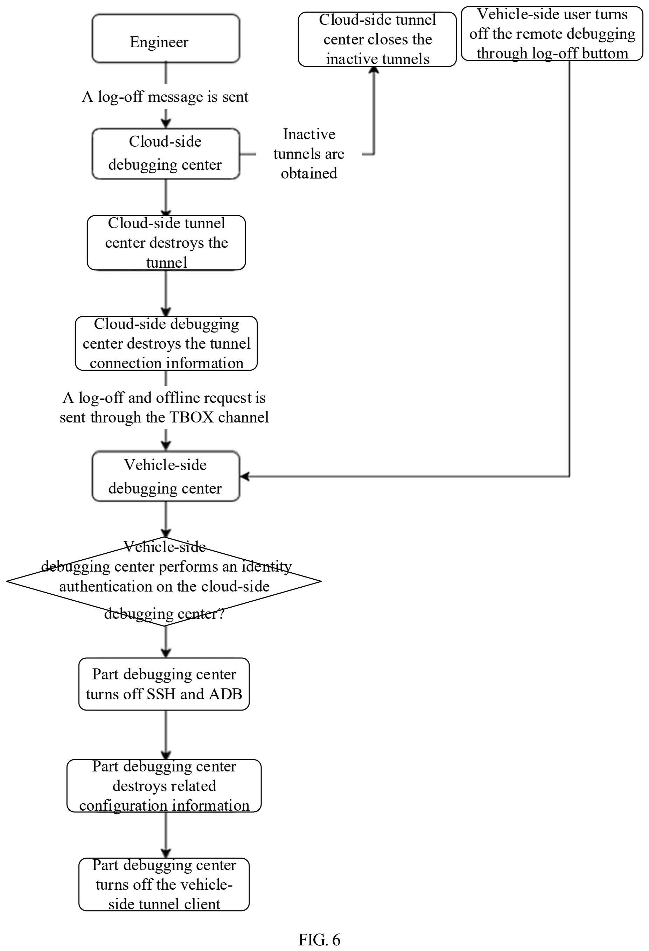

Specifically, as shown in FIG. 6, the embodiments of the present application further provide a log-off scheme that the cloud platform proactively logs off the debugging tunnel. A log-off message is sent by the cloud-side debugging center to the cloud-side tunnel center and a log-off command is sent by the cloud-side debugging center to the vehicle-side debugging center, so that the cloud-side tunnel center and the target part debugging center are enabled to close the debugging tunnel, so as to improve the flexibility of vehicle remote debugging and diagnosis control.

Additionally, in some optional embodiments, the cloud-side debugging center periodically detects inactive tunnels that have not transmitted data over a preset duration via the cloud tunnel center, so as to send log-off commands to automatically log off the inactive tunnels.

The present application further provides a computer-readable storage medium. The methods described above according to the embodiments of the present application may be implemented in hardware or firmware, or implemented as computer codes that may be recorded in a storage medium, or implemented as computer codes that may be downloaded via a network from a remote storage medium or non-transitory machine-readable storage medium and subsequently stored in a local storage medium. Thus, the described method may be stored as software in a storage medium utilizing a general-purpose computer, a specialized processor, or programmable or dedicated hardware. Herein, storage media may comprise magnetic discs, optical discs, read-only memory, random access memory, flash memory, hard disks, solid-state drives, or the like; optionally, storage media may further comprise combinations of the aforementioned memory types. It will be understood that the computer, processor, microprocessor controller, or programmable hardware comprise a storage component capable of storing or receiving software or computer codes, and the method shown in the above embodiments is implemented when the software or computer codes are accessed and executed by the computer, processor, or hardware.

Although embodiments of the present application have been described with reference to the accompanying drawings, those skilled in the art may make various modifications and variations without departing from the spirit and scope of the present application, and such modifications and variations fall within the scope defined by the appended claims.

Claims

1. A vehicle remote diagnosis and debugging method, **characterized in that**, the method is applied to a vehicle, and the method comprises:

sending information of a part to be debugged by a vehicle-side debugging center to a cloud-side debugging center, so that the cloud-side debugging center, in response to the information of the part to be debugged, requests tunnel connection information from a cloud-side tunnel center on a cloud platform, wherein the vehicle-side debugging center and the cloud-side debugging center provided on the cloud platform are software modules configured to communicate with each other on a public network, and the cloud-side tunnel center is a server configured to establish an intranet penetration tunnel;

receiving the tunnel connection information returned by the cloud-side debugging center by the vehicle-side debugging center;

forwarding the tunnel connection information by the vehicle-side debugging center to a target part debugging center of the part to be debugged, wherein each debuggable part in the vehicle is provided with a part debugging center configured to control a vehicle-side tunnel client corresponding to each debuggable part to be turned on or turned off, and the vehicle-side tunnel client is a client configured to establish the intranet penetration tunnel;

turning on a target vehicle-side tunnel client by the target part debugging center, and requesting a debugging tunnel from the cloud-side tunnel center by the target vehicle-side tunnel client carrying the tunnel connection information, so that, after successfully verifying the tunnel connection information, the cloud-side tunnel center establishes the debugging tunnel; and

receiving a remote debugging instruction sent by the cloud platform based on the information of the part to be debugged by the target vehicle-side tunnel client, and debugging the part to be debugged according to the remote debugging instruction.

2. The method according to claim 1, **characterized in that** the information of the part to be debugged comprises attribute information of the part to be debugged and a diagnosis debugging code, wherein the attribute information of the part to be debugged is configured to describe the part to be debugged, and the diagnosis debugging code is configured to be returned by the cloud-side debugging center to the vehicle-side debugging center together with the tunnel connection information, so that the vehicle-side debugging center verifies whether the received diagnostic debugging code is consistent with the sent diagnostic debugging code.

3. The method according to claim 2, **characterized in that** the diagnosis debugging code is generated in the following way:

calculating and obtaining a hash value by using a current timestamp, a vehicle unique identifier, and screen coordinates, wherein the screen coordinates are coordinates clicked by a user on a vehicle-side screen when the user requests for generating the diagnosis debugging code; and

randomly extracting a data value with a predetermined number of bits from the hash value, so as to form the diagnosis debugging code.

4. The method according to claim 1, **characterized in that** the tunnel connection information comprises a tunnel connection code and tunnel identity authentication information.

5. The method according to claim 1, **characterized in that** the step of receiving a remote debugging instruction sent by the cloud platform based on the information of the part to be debugged by the target vehicle-side tunnel client comprises:

receiving the remote debugging instruction, and auditing the remote debugging instruction based on an instruction whitelist and a parameter whitelist;

if an auditing result is not pass, refusing to debug the part to be debugged according to the remote debugging instruction; and

if an auditing result is pass, performing the step of debugging the part to be debugged according to the remote debugging instruction.

6. The method according to claim 2, **characterized in that** the method further comprises:
turning off the target vehicle-side tunnel client by the target part debugging center, and destroying the tunnel connection information and the diagnosis debugging code, so that the debugging tunnel is closed when the cloud-side tunnel center detects that the debugging tunnel does not transmit data over a preset time duration.

7. The method according to claim 2, **characterized in that**, after the vehicle-side debugging center verifies the received diagnostic debugging code is consistent with the sent diagnostic debugging code, the method further comprises:
disabling a USB local debugging mechanism and destroying the diagnosis debugging code by the vehicle-side debugging center.

8. A vehicle remote diagnosis and debugging method, **characterized in that**, the method is applied to a cloud platform, and the method comprises:

receiving information of a part to be debugged sent by a vehicle-side debugging center by a cloud-side debugging center, wherein the vehicle-side debugging center and the cloud-side debugging center are software modules configured to communicate with each other on a public network, and the vehicle-side debugging center is provided on a vehicle;

in response to the information of the part to be debugged, requesting tunnel connection information from a cloud-side tunnel center by the cloud-side debugging center, wherein the cloud-side tunnel center is a server which is provided on a cloud platform and configured to establish an intranet penetration tunnel;

sending the tunnel connection information to the vehicle-side debugging center by the cloud-side debugging center, so that the vehicle-side debugging center forwards the tunnel connection information to a target part debugging center of the part to be debugged, so as to enable the target part debugging center to turn on a target vehicle-side tunnel client, wherein each debuggable part in the vehicle is provided with a part debugging center configured to control a vehicle-side tunnel client corresponding to each debuggable part to be turned on or turned off, and the vehicle-side tunnel client is a client configured to establish the intranet penetration tunnel;

receiving the tunnel connection information sent by the target vehicle-side tunnel client by the cloud-side tunnel center, and verifying the tunnel connection information;

after successfully verifying the tunnel connection information, establishing a debugging tunnel by the cloud-side tunnel center; and

sending a remote debugging instruction, generated based on the information of the part to be debugged, through the debugging tunnel to the target vehicle-side tunnel client, so that the vehicle debugs the part to be debugged according to the remote debugging instruction.

9. The method according to claim 8, **characterized in that** the step of, in response to the information of the part to be debugged, requesting tunnel connection information from a cloud-side tunnel center by the cloud-side debugging center comprises:

when the cloud-side tunnel center receives a request message sent by the cloud-side debugging center, verifying whether IP information of the cloud-side debugging center is included within pre-stored IP information;

if the IP information is included within the pre-stored IP information, performing two-way certificate authentication on the cloud-side debugging center by the cloud-side tunnel center;

if the two-way certificate authentication is passed, verifying an account and a password sent by the cloud-side debugging center by the cloud-side tunnel center; and

if the verification of the account and the password is passed, in response to the request message, sending the tunnel connection information by the cloud-side tunnel center to the cloud-side debugging center.

10. The method according to claim 8, **characterized in that** the step of sending a remote debugging instruction, generated based on the information of the part to be debugged, through the debugging tunnel to the target vehicle-side tunnel client comprises:

auditing the remote debugging instruction based on an instruction whitelist and a parameter whitelist;

if an auditing result is not pass, refusing to send the remote debugging instruction; and

if an auditing result is pass, sending the remote debugging instruction.

11. The method according to claim 8, **characterized in that** the method further comprises:

sending a log-off message by the cloud-side debugging center to the cloud-side tunnel center;

in response to the log-off message, closing the debugging tunnel and destroying the tunnel connection information by the cloud-side tunnel center; and

destroying the tunnel connection information by the cloud-side debugging center and sending a log-off command to the vehicle-side debugging center, so that the vehicle-side debugging center forwards the log-off command to the target part debugging center, so as to enable the target part debugging center to turn off the target vehicle-side tunnel client and destroy the tunnel connection information.

12. A vehicle remote diagnosis and debugging system, **characterized in that** the system comprises a vehicle and a cloud platform, wherein:

the vehicle is configured to send information of a part to be debugged by means of a vehicle-side debugging center to a cloud-side debugging center on the cloud platform, wherein the vehicle-side debugging center and the cloud-side debugging center are software modules configured to communicate with each other on a public network;

the cloud platform is configured to, in response to the information of the part to be debugged, request tunnel connection information from a cloud-side tunnel center by means of the cloud-side debugging center, wherein the cloud-side tunnel center is a server which is provided on the cloud platform and configured to establish an intranet penetration tunnel;

the cloud platform is configured to send the tunnel connection information to the vehicle-side debugging center by means of the cloud-side debugging center;

the vehicle is configured to forward the tunnel connection information by means of the vehicle-side debugging center to a target part debugging center of the part to be debugged, wherein each debuggable part in the vehicle is provided with a part debugging center configured to control a vehicle-side tunnel client corresponding to each debuggable part to be turned on or turned off, and the vehicle-side tunnel client is a client configured to establish the intranet penetration tunnel;

the vehicle is configured to turn on a target vehicle-side tunnel client by means of the target part debugging center;

the vehicle is configured to send the tunnel connection information to the cloud-side tunnel center by means of the target vehicle-side tunnel client;

the cloud platform is configured to verify the tunnel connection information by means of the cloud-side tunnel center, and, after successfully verifying the tunnel connection information, establish the debugging tunnel;

the cloud platform is configured to send a remote debugging instruction, generated based on the information of the part to be debugged, through the debugging tunnel to the target vehicle-side tunnel client; and

the vehicle is configured to debug the part to be debugged according to the remote debugging instruction.

| Cloud platform | Cloud-side debugging center | | Cloud-side tunnel center |
|---|---|---|---|

Encrypted interaction by a TBOX channel

Encrypted interaction by a tunnel

| Vehicle | Vehicle-side debugging center |
|---|---|

| QNX | TBOX | EDC |
|---|---|---|
| Part debugging center | Part debugging center | Part debugging center |
| Vehicle-side tunnel cilent | Vehicle-side tunnel cilent | Vehicle-side tunnel cilent |
| Services such as SSH, ADB and the like | Services such as SSH, ADB and the like | Services such as SSH, ADB and the like |

FIG. 1

Vehicle

Cloud platform

S101

S201

S202

S203

S102

S103

S104

S204

S205

S206

S105

FIG. 2

```
                        ┌─────────────────────┐
                        │   User reports a    │
                        │      problem        │
                        └─────────────────────┘
                                  │
                                  ▼
          ┌──────────────────────────────────────────────┐
          │ Engineer guides the user to perform operations to │
          │ generate a one-time diagnosis debugging code and  │
          │    information of a part to be debugged        │
          └──────────────────────────────────────────────┘
                                  │
                                  ▼
          ┌──────────────────────────────────────────────┐
          │  User sends the diagnosis debugging code and the │
          │ information of the part to be debugged to the engineer │
          └──────────────────────────────────────────────┘
                                  │
                                  ▼
          ┌──────────────────────────────────────────────┐
          │                  Engineer                      │◄──────────────┐
          └──────────────────────────────────────────────┘               │
                                  │                                       │
                     Log in the remote debugging center                  │
                                  │                                       │
                                  ▼                  ┌──────────────────┐ │
          ┌──────────────────────────────────────┐   │ Inputting the diagnosis │ │
          │        Cloud-side debugging center      │◄──│ debugging code and the  │ │
          └──────────────────────────────────────┘   │ information of the part to │ │
                                  │                  │    be debugged       │ │
                     Request tunnel connection information            └──────────────────┘ │
                                  │                                       │
                                  ▼                                       │
          ┌──────────────────────────────────────┐                       │
          │        Cloud-side tunnel center         │                     NO │
          └──────────────────────────────────────┘                       │
                                  │                                       │
  ┌──────────────────┐            ▼                                       │
  │ IP address verification, │     ◇                    ┌──────────────────┐│
  │ two-way certificate  │──►Pass the verification on the ──NO──►│ Disable to send tunnel ││
  │  authentication,     │   cloud-side debugging center ?      │ connection information ││
  │ account- password    │            ◇                    └──────────────────┘│
  │   verification       │            │                                     │
  └──────────────────┘           YES                                     │
                                  ▼                                       │
          ┌──────────────────────────────────────┐                       │
          │     Send tunnel connection information   │                     │
          └──────────────────────────────────────┘                       │
                                  │                                       │
                                  ▼                                       │
                          ◇ Cloud-side ◇                                  │
                  debugging center receives the ────────────────────────┘
                        tunnel connection
                           information?
                                  │
                                 YES
                                  ▼
                        ┌─────────────────────┐
                        │ Cloud-side debugging │
                        │       center        │
                        └─────────────────────┘
```

FIG. 3

IP address verification, two-way certificate
authentication, account-password verification

↓

Cloud-side
debugging center receives the
tunnel connection
information?

Part debugging
center performs an identity
authentication on the vehicle-side
debugging center? —Not pass→ Disconnect

YES

pass

↓

Packaged
information → Cloud-side debugging
center

The corresponding vehicle-side tunnel client is
turned on and the corresponding debugging
services such as SSH and ADB are started

Sending packaged information through TBOX

↓

Vehicle-side debugging
center

The part debugging center disables the USB
local debugging mechanism and destroys the
diagnosis debugging code

↓

Disconnect ← Not pass— Vehicle-side
debugging center performs an identity
authentication on the cloud-side
debugging center?

The vehicle-side tunnel client sends a request
message carrying the tunnel connection
information to the cloud-side tunnel center to
request for establishing a debugging tunnel

pass

↓

Disconnect ← Does not
authorize — An authorization
confirmation window is popped up by
the vehicle-side debugging center, to
wait for the user to authorize

The cloud-side tunnel center
performs verification —Not pass→ Disconnect

Authorize

pass

↓

Vehicle-side debugging center forwards
information to the part debugging center

The tunnel is established and the tunnel
connection code is distroyed

FIG. 4

FIG. 5

Engineer

A log-off message is sent

Cloud-side
debugging center

Inactive
tunnels are
obtained

Cloud-side tunnel
center closes the
inactive tunnels

Vehicle-side user turns
off the remote debugging
through log-off buttom

Cloud-side tunnel
center destroys the
tunnel

Cloud-side debugging
center destroys the tunnel
connection information

A log-off and offline request is
sent through the TBOX channel

Vehicle-side
debugging center

Vehicle-side
debugging center performs an identity
authentication on the cloud-side
debugging center?

Part debugging center
turns off SSH and ADB

Part debugging center
destroys related
configuration information

Part debugging center
turns off the vehicle-
side tunnel client

FIG. 6

## INTERNATIONAL SEARCH REPORT

| International application No. |
|---|
| **PCT/CN2024/143169** |

**A.     CLASSIFICATION OF SUBJECT MATTER**

G05B 23/02(2006.01)i

According to International Patent Classification (IPC) or to both national classification and IPC

**B.     FIELDS SEARCHED**

Minimum documentation searched (classification system followed by classification symbols)

IPC:G05B23

Documentation searched other than minimum documentation to the extent that such documents are included in the fields searched

Electronic data base consulted during the international search (name of data base and, where practicable, search terms used)

DWPI, CNTXT, WPABS, ENTXT, CNKI: 车辆, 远程, 诊断, 调试, 车端, 云端, 隧道, 连接, 链接, 服务器, 服务端, 零件, 零部件, 开启, 关闭, 时间戳, 标识, 哈希, 身份认证, 白名单, 校验, 审核, 审查, 禁用, vehicle, remote, diagnostic, commissioning, tunnel, connection, link, server, part, component, open, closed, timestamp, identification, hash, authentication, whitelist, check, review, disable

**C.     DOCUMENTS CONSIDERED TO BE RELEVANT**

| Category* | Citation of document, with indication, where appropriate, of the relevant passages | Relevant to claim No. |
|---|---|---|
| X | CN 116828009 A (CHONGQING CHANGAN AUTOMOBILE CO., LTD.) 29 September 2023 (2023-09-29)<br>description, paragraphs [0063]-[0146] | 1, 4, 8, 12 |
| A | CN 113960988 A (HEZHONG NEW ENERGY AUTOMOBILE CO., LTD.) 21 January 2022 (2022-01-21)<br>entire document | 1-12 |
| A | CN 115001870 A (GUOQI INTELLIGENT CONTROL (BEIJING) TECHNOLOGY CO., LTD.) 02 September 2022 (2022-09-02)<br>entire document | 1-12 |
| A | CN 115443637 A (SANNATUS CORP.) 06 December 2022 (2022-12-06)<br>entire document | 1-12 |
| A | CN 116996548 A (NANJING THUNDER SOFTWARE TECHNOLOGY CO., LTD.) 03 November 2023 (2023-11-03)<br>entire document | 1-12 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 March 2025** | **21 March 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/143169** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2017257345 A1 (FORD GLOBAL TECHNOLOGIES LLC) 07 September 2017 (2017-09-07) entire document | 1-12 |
| A | US 2021264384 A1 (INNOVA ELECTRONICS CORP.) 26 August 2021 (2021-08-26) entire document | 1-12 |

Form PCT/ISA/210 (second sheet) (July 2022)

# EP 4 697 114 A1

| | INTERNATIONAL SEARCH REPORT<br>Information on patent family members | | | International application No.<br>**PCT/CN2024/143169** | | |

| Patent document<br>cited in search report | | | Publication date<br>(day/month/year) | Patent family member(s) | | | Publication date<br>(day/month/year) |
|---|---|---|---|---|---|---|---|
| CN | 116828009 | A | 29 September 2023 | None | | | |
| CN | 113960988 | A | 21 January 2022 | None | | | |
| CN | 115001870 | A | 02 September 2022 | None | | | |
| CN | 115443637 | A | 06 December 2022 | EP | 4097923 | A1 | 07 December 2022 |
| | | | | JP | 2023516760 | A | 20 April 2023 |
| | | | | WO | 2021178979 | A1 | 10 September 2021 |
| | | | | KR | 20220152268 | A | 15 November 2022 |
| CN | 116996548 | A | 03 November 2023 | None | | | |
| US | 2017257345 | A1 | 07 September 2017 | DE | 102017102539 | A1 | 07 September 2017 |
| | | | | US | 11228569 | B2 | 18 January 2022 |
| US | 2021264384 | A1 | 26 August 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410006860X